# EUROPÄISCHE PATENTANMELDUNG

(11) **EP 0 905 954 A2**
(43) Veröffentlichungstag der Anmeldung: **31.03.1999**
(21) Anmeldenummer: 98116275.3
(22) Anmeldetag: 28.08.1998
(51) Int. Cl.: H04M 1/65

(54) **Verfahren zum Aufzeichnen eines digitalisierten Audiosignals und Telefonanrufbeantworter**

(30) Priorität: 29.09.1997 DE 19742944
(71) Anmelder: SIEMENS AKTIENGESELLSCHAFT, 80333 München (DE)
(72) Erfinder: Hermann, Michael, 84453 Muehldorf (DE); Degenhardt, Achim, 82110 Germering (DE)

(57) **Zusammenfassung**

Es ist ein Verfahren zum Aufzeichnen eines digitalisierten Audiosignals und ein Telefonanrufbeantworter offenbart, bei dem dieses Verfahren vorteilhaft eingesetzt werden kann. Gemäß dem Verfahren wird ein digitales Eingangssignal bis zu einem ersten Zeitpunkt eingelesen und anschließend die eingelesenen Daten in einem Speichermedium für digitale Daten gespeichert. Nach dem ersten Zeitpunkt wird das Einlesen des digitalen Eingangssignals fortgesetzt. Die nunmehr eingelesenen Daten werden mittels eines vorbestimmten Kompressionsalgorithmus gemäß einer ersten vorbestimmten Datenkompressionsrate komprimiert. Schließlich werden die derart komprimierten Daten in dem Speichermedium für digitale Daten gespeichert. Mit dem Verfahren ist eine besonders wirtschaftliche Ausnutzung eines begrenzten Speichervolumens möglich.

## Beschreibung

Die Erfindung betrifft Verfahren zum Aufzeichnen eines digitalisierten Audiosignals und einen Telefonanrufbeantworter, bei dem solche Verfahren vorteilhaft eingesetzt werden könen.

Bei den gegenwärtig handelsüblich erhältlichen digitalen Anrufbeantwortern wird für die Aufzeichnung einer akustischen Nachricht das digitalisierte Signal von der bei optimaler Umsetzung entstehenden Datenmenge auf eine geringere Datenmenge reduziert, um Kosten für die dafür nötigen Speicher zu sparen. Für die digitale Speicherung wird das analoge Sprachsignal in einem ersten Schritt mit einer vorgegebenen Abtastrate digitalisiert. Der dadurch entstehende Datenstrom wird in einem zweiten Schritt mit Hilfe eines Daten- bzw. Sprachkompressionsverfahrens komprimiert. Der durch die Datenkompression reduzierte Datenstrom wird dann in einem dritten Schritt in einem digitalen Speicher aufgezeichnet. Ein nach diesem Prinzip arbeitendes System ist beispielsweise in dem von der Anmelderin erhältlichen Anrufbeantworter mit der Typenbezeichnung GIGASET 1030 integriert.

Das Verhältnis zwischen dem eingehenden Datenstrom pro Zeiteinheit (d. h. die Abtastwerte eines A/D-Wandlers oder der bei einem ISDN-Telefon eingehenden digitalen Sprachinformation) und dem nach der Datenkompression vorliegenden Datenstrom pro Zeiteinheit wird als Datenkompressionsrate bezeichnet. Eine hohe Datenkompressionsrate hat demnach eine starke Verringerung des Datenvolumens durch die Kompression zur Folge. Da jedoch mit zunehmender Datenkompressionsrate die Sprachverständlichkeit sinkt, muß zwischen der Höhe der Datenkompressionsrate und der dadurch erzielten Sprachverständlichkeit abgewogen werden.

Bei den heute verfügbaren Anrufbeantwortern wird die digitale Sprachaufzeichnung mit einer festen Datenkompressionsrate durchgeführt. Einige Geräte erlauben immerhin die manuelle Veränderung der Datenkompressionsrate, jedoch muß dies vom Benutzer vorgegeben werden und kann nicht automatisch gesteuert werden. Andere Geräte ermöglichen eine nachträgliche Datenverdichtung bereits aufgezeichneter Nachrichten, indem die bereits aufgezeichneten Nachrichten aus dem Speicher ausgelesen werden, einer Datenkompression unterzogen werden und anschließend wieder in den Speicher geschrieben werden. Dieser Vorgang wird häufig auch als Rekompression bezeichnet.

Aus der DE-OS 44 26 534 ist ein Verfahren zur Steuerung der Signalaufzeichnung für einen digitalen Anrufbeantworter bekannt geworden. Bei diesem Verfahren wird ebenfalls von der Möglichkeit der Datenkompression Gebrauch gemacht. Gemäß dem dort offenbarten Verfahren wird die Signalaufzeichnung derart gesteuert, daß das Verhältnis zwischen Sprachqualität und Aufzeichnungskapazität abhängig von der aufzuzeichnenden Datenmenge geregelt wird. Zu diesem Zweck wird die Datenkompressionsrate abhängig von der noch verfügbaren Speicherkapazität eingestellt oder eine Datenrekompression vorgenommen. Dabei wird jedoch immer eine Nachricht als Ganzes einer Datenkompression unterzogen.

Aus der JP-8-98134 ist eine Datenaufzeichnungsvorrichtung bekannt geworden, bei der digitalisierte Bild- oder Klangdaten mit variabler Kompressionsrate in einem Aufzeichnungsmedium aufgezeichnet werden. Die Kompressionsrate wird dabei mit Hilfe einer Diskriminatorschaltung von der Dateninformationsmenge abhängig gemacht. Dies erfordert einen sehr hohen Schaltungsaufwand.

Das der Erfindung zugrundeliegende technische Problem besteht darin, ein Verfahren und eine Vorrichtung anzugeben, mit dem die Datenkompression eines Audiosignals auf besonders einfache Weise flexibler gehandhabt werden kann.

Das Problem wird gelöst mit einem Verfahren mit den Merkmalen von Patentanspruch 1 und mit einem Telefonanrufbeantworter mit den Merkmalen von Patentanspruch 11. Vorteilhafte Weiterbildungen dieser Gegenstände sind in den jeweiligen Unteransprüchen angegeben.

Ein bevorzugtes Verfahren zum Aufzeichnen eines digitalisierten Audiosignals nach der Erfindung erfolgt durch Einlesen des digitalen Eingangssignals bis zu einem ersten Zeitpunkt und durch Speichern der eingelesenen Daten in einem Speichermedium für digitale Daten. Das Einlesen des digitalen Eingangssignals wird nach dem ersten Zeitpunkt fortgesetzt, und die dann eingelesenen Daten werden mittels eines Kompressionsalgorithmus, der typischerweise verlustbehaftet ist, gemäß einer vorbestimmten ersten Datenkompressionsrate komprimiert. Die nach der Datenkompression erhaltenen komprimierten Daten werden sodann in dem Speichermedium für digitale Daten aufgezeichnet. Eine derartige Vorgehensweise ist vorteilhaft, weil bei einem Telefonanruf der Anrufer zu Beginn der Verbindung gewöhnlich seinen Namen und gegebenenfalls seine Telefonnummer bzw. Adresse nennt. Diese Information soll mit möglichst besonders hoher Qualität aufgezeichnet werden. Der sich daran anschließende Nachrichtenteil kann dann mit verminderter Sprachqualität aufgezeichnet werden, weil sich durch die Identifizierung des Anrufers eine eventuell verloren gehende Information in der Regel leicht wiedergewinnen läßt. In einer bevorzugten Ausführungsform des Verfahrens hängt der erste Zeitpunkt vom eingelesenen Signal ab. In einer dazu alternativen Ausführungsform hat der erste Zeitpunkt einen vorbestimmten Wert.

In einem besonders bevorzugten Ausführungsbeispiel der Erfindung wird das Eingangssignal bis zum ersten Zeitpunkt einer Datenkompression mit einer zweiten Datenkompressionsrate unterzogen. Die zweite Datenkompressionsrate ist dabei kleiner oder gleich der ersten Datenkompressionsrate. Die zweite Datenkompressionsrate reduziert die Datenmenge im anfänglichen Teil eines Telefonanrufs auf einen Wert, bei dem eine vorbestimmte Mindestsprachqualität sichergestellt ist. Dennoch ist die aufzuzeichnende Datenmenge gegenüber der ursprünglich vorliegenden Datenmenge reduziert.

In einem besonders bevorzugten Ausführungsbeispiel der Erfindung wird vor dem Einlesen des digitalen Eingangssignals das Auslesen eines bereits aufgezeichneten digitalisierten Audiosignals aus diesem Speichermedium vorgenommen. Das heißt, ein einzulesendes Signal wird durch Auslesen einer gespeicherten Nachricht aus dem Speicher gewonnen, um dann erneut einer Kompression unterzogen zu werden. Es kommt dadurch zu einer Rekompression der bereits aufgezeichneten Daten nach dem ersten Zeitpunkt, so daß durch die Verdichtung der Daten Speicherraum für weitere Aufzeichnungen verfügbar gemacht wird. Besonders bevorzugt wird dabei, daß die Kompression mit einer vorbestimmten dritten Datenkompressionsrate erfolgt, die größer als die erste Kompressionsrate ist. Dies ist besonders dann vorteilhaft, wenn bei der erstmaligen Aufzeichnung bereits eine erste Datenkompression vorgenommen wurde. Die erste, zweite und dritte Kompressionsrate ist dabei jeweils einer Vielzahl verfügbarer Kompressionsraten entnommen.

Weiterhin wird ganz besonders bevorzugt, das ausgelesene digitalisierte Audiosignal hinsichtlich dessen Komprimierbarkeit zu überprüfen. Dadurch wird sichergestellt, daß keine übermäßige Verschlechterung der Sprachqualität eintritt. Die Überprüfung erfolgt vorzugsweise anhand des Signalpegels des ausgelesenen Audiosignals, der Stärke eines im Audiosignal enthaltenen Hintergrundrauschens oder der Tatsache, daß das Audiosignal schon einmal abgehört wurde. Dabei wird besonders bevorzugt, dieses Aufzeichnungsverfahren so lange hintereinander auszuführen, bis die Überprüfung ergibt, daß keine weitere Komprimierung möglich ist.

In jedem der beschriebenen Ausführungsbeispiele wird bevorzugt, die erste, zweite bzw. dritte Kompressionsrate anhand des Eingangssignals aus der Vielzahl verfügbarer Kompressionsraten auszuwählen. Bei der Auswahl ist es ebenfalls möglich, auf eine Datenkompression gänzlich zu verzichten. Weiterhin ist besonders bevorzugt, beim Speichern von Daten in dem Speichermedium Informationen über die gerade verwen-dete Kompressionsrate in dem Speichermedium abzuspeichern. Diese Information kann bei einer späteren Wiedergabe einer Nachricht verwendet werden.

Ein bevorzugter Telefonanrufbeantworter weist ein Speichermedium für digitale Daten, eine Einrichtung zum Komprimieren eines digitalisierten Audiosignals und eine Einrichtung zum Aufzeichnen von Daten in dem Speichermedium auf. Der Telefonanrufbeantworter ist gekennzeichnet durch eine Einrichtung zum Umschalten der Kompressionseinrichtung während einer laufenden Aufzeichnung. Durch Umschalten kann die Kompressionseinrichtung in ihrer Funktion sogar ein- und ausgeschaltet werden. Ein derartiger Telefonanrufbeantworter ist in der Lage, beispielsweise durch Ausführen der zuvor beschriebenen Verfahren die oben genannten Vorteile zu erzielen.

Es wird besonders bevorzugt, die Umschalteinrichtung mit einer Prüfeinrichtung auszustatten, die die Komprimierbarkeit des Eingangssignals prüft. Ganz besonders wird bevorzugt, die Umschalteinrichtung mit einer Wähleinrichtung zu versehen, mit der die Kompressionsrate anhand des Ergebnisses der Prüfeinrichtung ausgewählt werden kann. Eine Kompressionsrate mit dem Betrag 1 entspricht dabei einer ausgeschalteten Kompressionseinrichtung.

Ein bevorzugtes Verfahren zum Aufzeichnen eines digitalisierten, komprimierten Audiosignals in einem Speichermedium eines Telefonanrufbeantworters besteht im Unterteilen des aufzuzeichnenden digitalen Datenstroms in Datenpakete, im Hinzufügen von Information zu jedem Datenpaket hinsichtlich der bei der Kompression der Audiosignale verwendeten Kompressionsrate und im Speichern der so erhaltenen Datenpakete in dem Speichermedium. Auf die derart abgespeicherte Information kann bei der Wiedergabe zurückgegriffen werden, um sie entsprechend auszuwerten. Dabei wird weiterhin besonders bevorzugt, Information über die Tatsache hinzuzufügen, daß das Audiosignal schon einmal abgehört wurde.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung. In der Zeichnung zeigen:
- Figur 1: der zeitliche Verlauf einzelner Nachrichtenaufzeichnungen nach einem ersten Ausführungsbeispiel, und
- Figur 2: der zeitliche Verlauf verschiedener Nachrichtenaufzeichnungen nach einem zweiten Ausführungsbeispiel.

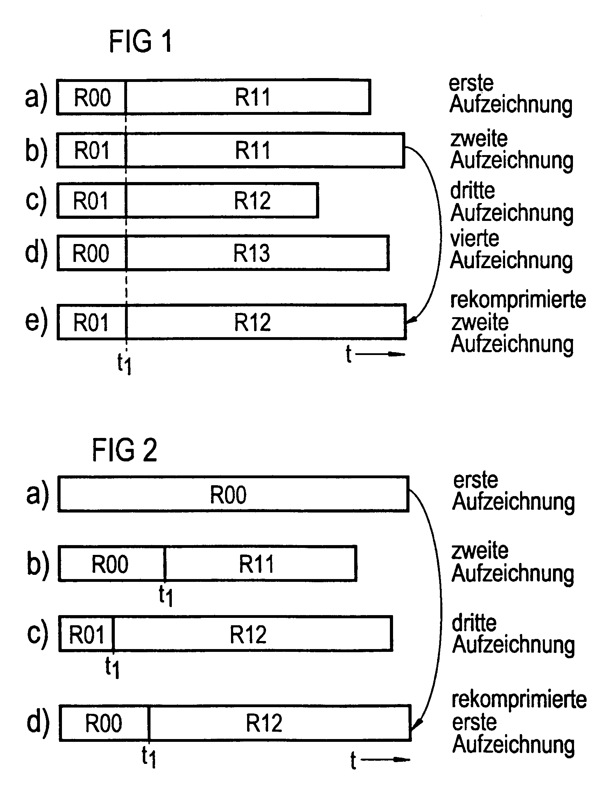

Figur 1 zeigt diagrammartig, wie einzelne Nachrichtenaufzeichnungen in ein digitales Speichermedium aufgezeichnet werden. Die horizontalen Balken a bis e stellen dabei den zeitlichen Verlauf verschiedener Nachrichtenaufzeichnungen dar. Der daraus resultierende Speicherbedarf ergibt sich aus der Länge des Balkens in Verbindung mit der dafür zugrundegelegten Kompressionsrate. Wie aus Figur 1 ersichtlich, wird der Hauptteil einer Nachricht mit einer ersten Kompressionsrate aufgezeichnet, und der Anfangsteil einer Nachricht bis zu einem Zeitpunkt t₁ wird mit einer zweiten Datenkompressionsrate aufgezeichnet. Der Zeitpunkt t₁ ist im Ausführungsbeispiel nach Figur 1 für alle Nachrichtenaufzeichnungen auf den gleichen vorbestimmten Wert festgelegt.

In der ersten Aufzeichnung a wird für den Nachrichtenanfangsteil die Datenkompressionsrate R00 verwendet, und für den Nachrichtenhauptteil wird die Kompressionsrate R11 verwendet. Die Kompressionsrate R00 beträgt dabei 1, so daß für den Nachrichtenanfangsteil keine Kompression durchgeführt wurde. Die Kompressionsrate R11 ist ein aus einer Vielzahl möglicher Datenkompressionsraten ausgewählter Wert. Für die zweite Aufzeichnung wurde im Nachrichtenanfangsteil die Kompressionsrate R01 verwendet, und im Nachrichtenhauptteil wurde wiederum die Kompressionsrate R11 verwendet. Dabei ist die Kompressionsrate R01 kleiner oder gleich der Kompressionsrate R11. Bei der dritten Aufzeichnung c wurde für den Nachrichtenanfangsteil die Datenkompressionsrate R01 verwendet, und für den Nachrichtenhauptteil wurde die Datenkompressionsrate R12 verwendet. Wiederum ist die Datenkompressionsrate R01 kleiner oder gleich der Datenkompressionsrate R12. Die Datenkompressionsrate R12 unterscheidet sich jedoch in der bei der ersten und zweiten Aufzeichnung verwendeten Datenkompressionsrate R11. Im bevorzugten Ausführungsbeispiel nach Figur 1 ist die Datenkompressionsrate R12 größer als die Datenkompressionsrate R11. Bei der vierten Aufzeichnung d wurde für den Nachrichtenanfangsteil keine Kompression gewählt, das heißt die Datenkompressionsrate ist R00 = 1, und für den Nachrichtenhauptteil wurde eine Datenkompressionsrate R13 gewählt. Im bevorzugten Ausführungsbeispiel ist die Datenkompressionsrate R13 größer als die Datenkompressionsrate R12.

Figur 1 zeigt darüber hinaus eine rekomprimierte zweite Aufzeichnung e, die dadurch entsteht, daß die zweite Aufzeichnung b ausgelesen wird und einem erneuten Kompressionsvorgang unterzogen wird. Im Ausführungsbeispiel nach Figur 1 bleibt dabei die Kompressionsrate R01 für den Nachrichtenanfangsteil unverändert, und die Kompressionsrate für den Nachrichtenhauptteil erhöht sich von der Datenkompressionsrate R11 auf die Datenkompressionsrate R12. Aufgrund der nun erhöhten Datenkompressionsrate wird bei unveränderter zeitlicher Dauer der Aufzeichnung weniger Speicherplatz benötigt, um die Nachricht in einem digitalen Speichermedium aufzuzeichnen. Dabei bleibt jedoch die Aufzeichnungsqualität für den Nachrichtenanfangsteil R01 unverändert.

Figur 2 zeigt in ähnlicher Weise den zeitlichen Verlauf verschiedener Aufzeichnung in dem Speichermedium. Das Ausführungsbeispiel nach Figur 2 unterscheidet sich von jenem nach Figur 1 darin, daß in diesem Fall der Zeitpunkt t₁ für unterschiedliche Aufzeichnungen unterschiedlich gewählt sein kann. Dies könnte abhängen von der bisherigen gesamten Speicherplatzbelegung oder von der akustischen Qualität des Eingangssignals, insbesondere hinsichtlich Hintergrundrauschen oder vorherrschendem durchschnittlichem Signalpegel.

Die erste Aufzeichnung a von Figur 2 ist durchgehend mit der Datenkompressionsrate R00 = 1 aufgezeichnet worden, ist also nicht komprimiert worden. Die zweite Aufzeichnung b wurde im Nachrichtenanfangsteil mit der Datenkompressionsrate R00 aufgezeichnet, und der Nachrichtenhauptteil nach dem Zeitpunkt t₁ wurde mit der Datenkompressionsrate R11 aufgezeichnet. Die dritte Aufzeichnung c von Figur 2 wurde in ähnlicher Weise aufgezeichnet wie die dritte Aufzeichnung c von Figur 1, wobei bei der dritten Aufzeichnung c nach Figur 2 ein anderer Zeitpunkt t₁ als Grenze zwischen Nachrichtenanfangsteil und Nachrichtenhauptteil vorliegt. Ferner ist in Figur 2 eine rekomprimierte erste Aufzeichnung d dargestellt, bei der die ursprünglich ohne Kompression aufgezeichnete erste Aufzeichnung a nun bis zu einem Zeitpunkt t₁ ohne Kompression belassen wird, und für die erneute Aufzeichnung des Nachrichtenhauptteils eine Datenkompressionsrate R12 gewählt wurde.

Das Verfahren nach der Erfindung ist vorteilhaft, weil zu Beginn eines Telefonanrufs der Anrufer gewöhnlich seinen Namen nennt und dieser mit möglichst hoher Qualität aufgezeichnet werden soll. Der Rest der Nachricht kann mit reduzierter Qualität aufgezeichnet werden. Ist aus Speicherplatzgründen eine nachträgliche Datenkompression schon abgespeicherter Nachrichten erforderlich, kann es sinnvoll sein, den Nachrichtenanfangsteil von der nachträglichen Datenkompression auszuschließen oder für den Nachrichtenanfangsteil eine geringere Datenkompressionsrate zu wählen als beim Nachrichtenhauptteil. Dadurch ist sichergestellt, daß auch nach der zusätzlichen Datenkompression zumindest der kritische Teil einer Nachricht beim späteren Abhören verständlich bleibt. Dies ermöglicht es dem Nachrichtenempfänger, den Anrufer zu identifizieren.

Das Umschalten der Datenkompressionsrate innerhalb einer Nachricht erfordert das Abspeichern der verwendeten Kompressionsrate in dem Datenstrom. In den komprimierten Datenstrom müssen demnach zusätzliche Steuerinformationen eingefügt werden. In vorteilhafter Weise kann der Datenstrom dazu in Datenpakete unterteilt werden, wobei jedes Datenpaket eine bestimmte Anzahl von Datenbits der Nachricht zusammenfaßt. Alternativ dazu kann der Datenstrom auch in gleiche Zeiteinheiten unterteilt sein, die ihrerseits Datenpakete aufweisen. Die Paketgröße hängt dann von der verwendeten Kompressionsrate ab. In jedem Fall besteht eine Nachricht aus einer Vielzahl von Datenpaketen. Für jedes dieser Datenpakete wird eine Steuerinformation abgespeichert. Die Steuerinformationen enthalten die verwendete Datenkompressionsrate und gegebenenfalls die Größe des Datenpaketes. Die Datenkompressionsrate gilt dann für alle Daten in dem Datenpaket.

Alternativ zum Abspeichern der Steuerinformation in dem Datenstrom kann der Zeitpunkt des Umschaltens der Datenkompressionsrate außerhalb der Nachricht als zugeordnete Tabelle gespeichert werden. In der Tabelle wird der jeweilige Zeitpunkt des Umschaltens der Datenkompressionsrate und die Größe der ab dem Zeitpunkt verwendeten Datenkompressionsrate abgelegt.

Das Verfahren ist auch für eine nachträgliche Datenkompression geeignet, ohne dabei einen wesentlichen Verlust an Sprachqualität zu erleiden. Dabei werden nur diejenigen Nachrichten weiter komprimiert, bei denen erwartet werden kann, daß bei der weiteren Kompression die Verständlichkeit nicht wesentlich verschlechtert wird. Mit dem Verfahren ist darüber hinaus eine flexible Zuordnung von unterschiedlichen Datenkompressionsraten zu den einzelnen Nachrichten möglich. Dies hat den Vorteil, daß je nach dem zu erwartenden Qualtitätsverlust die Datenkompressionsrate entsprechend gewählt wird.

Kriterien für die Auswahl einer Datenkompressionsrate sind beispielsweise die Tatsache, ob eine Nachricht bereits abgehört wurde, die Stärke eines vorhandenen Hintergrundrauschens im akustischen Signal oder der durchschnittliche Signalpegel des akustischen Signals. Bei schon abgehörten Nachrichten ist es nicht mehr erforderlich, den Nachrichtenhauptteil mit besonders hoher Sprachqualität abzuspeichern, da sich ein Bediener mühelos wieder an die Nachricht erinnern wird, sollte aufgrund verminderter Sprachqualität die Nachricht stellenweise unverständlich geworden sein. Dazu kann es vorteilhaft sein, den Zeitpunkt des Abhörens für die abgehörte Nachricht zu speichern.

Auch das Hintergrundrauschen in einer Nachricht ist als Auswahlkriterium für die Datenkompression geeignet. Bei Nachrichten mit einem hohen Hintergrundrauschen würde eine bestimmte Datenkompression zu einem weitaus höheren Qualitätsverlust führen, als bei Nachrichten mit geringerem Hintergrundrauschen. Derartige Nachrichten sollten daher mit einer niedrigeren Datenkompressionsrate aufgezeichnet werden und eignen sich demnach gegebenenfalls nicht für eine Rekompression. Die Information über den Rauschpegel kann beispielsweise während der ersten Aufzeichnung bestimmt werden und mit den Informationsdaten abgespeichert werden.

Als weiteres Auswahlkriterium für die Datenkompressionsrate eignet sich der durchschnittliche Signalpegel während der Aufzeichnung. Signale mit niedrigem durchschnittlichem Signalpegel haben gewöhnlich einen höheren Rauschpegel, was sich ebenfalls durch verstärkten Qualitätsverlust bei der Datenkompression bemerkbar macht. Der mittlere Signalpegel kann daher vorteilhafterweise beim ersten Aufzeichnen der Nachricht zusammen mit den Informationsdaten abgespeichert werden.

## Patentansprüche

1. Verfahren zum Aufzeichnen eines digitalisierten Audiosignals in einem Speichermedium eines Telefonanrufbeantworters, mit folgenden Schritten:
a) Einlesen des digitalen Eingangssignals bis zu einem ersten Zeitpunkt (t1)
b) Komprimieren der bis zum ersten Zeitpunkt (t1) eingelesenen Daten mittels eines Kompressionsalgorithmus gemäß einer vorbestimmten ersten Kompressionsrate (R00; R01), die größer oder gleich 1 ist;
c) Speichern der komprimierten Daten in einem Speichermedium für digitale Daten;
d) Einlesen des digitalen Eingangssignals nach dem ersten Zeitpunkt (t1);
e) Komprimieren der eingelesenen Daten mittels eines Kompressionsalgorithmus gemäß einer vorbestimmten zweiten Datenkompressionsrate (R11; R12; R13); und
f) Speichern der komprimierten Daten in dem Speichermedium für digitale Daten
**dadurch gekennzeichnet daß,**
die zweite Datenkompressionsrate größer oder gleich die erste Datenkompressionsrate gewählt wird.

2. Verfahren nach Patentanspruch 1,
**dadurch gekennzeichnet**, daß
der erste Zeitpunkt (t1) vom eingelesenen Signal abhängt.

3. Verfahren nach Patentanspruch 1,
**dadurch gekennzeichnet**, daß
der erste Zeitpunkt (t1) vorbestimmt ist.

4. Verfahren nach einem der vorhergehenden Patentansprüche,
**dadurch gekennzeichnet**, daß
vor dem Schritt des Einlesens des digitalen Eingangssignals bis zum ersten Zeitpunkt (t1) ein Schritt des Auslesens eines digitalisierten Audiosignals aus dem Speichermedium eingefügt wird.

5. Verfahren nach Patentanspruch 4,
**dadurch gekennzeichnet**, daß
der Schritt des Komprimierens der nach dem Zeitpunkt (t1) eingelesenen Daten mit einer vorbestimmten dritten Kompressionsrate (R12; R13) erfolgt, die größer als die erste Kompressionsrate (R11) ist.

6. Verfahren nach Patentanspruch 5,
**dadurch gekennzeichnet**, daß
das ausgelesene digitalisierte Audiosignal hinsichtlich dessen Komprimierbarkeit überprüft wird.

7. Verfahren nach Patentanspruch 6,
**dadurch gekennzeichnet**, daß
die Überprüfung anhand des Signalpegels des ausgelesenen Audiosignals, der Stärke eines im Audiosignal enthaltenen Hintergrundrauschens oder der Tatsache, daß das Audiosignal schon einmal ausgelesen wurde, vorgenommen wird.

8. Verfahren nach Patentanspruch 7,
**dadurch gekennzeichnet**, daß
das Verfahren solange hintereinander ausgeführt wird, bis die Überprüfung ergibt, daß keine weitere Komprimierung möglich ist.

9. Verfahren nach einem der vorhergehenden Patentansprüche,
**dadurch gekennzeichnet**, daß
die vorbestimmten ersten, zweiten oder dritten Kompressionsraten anhand des Eingangssignals ausgewählt wird.

10. Verfahren nach einem der vorhergehenden Patentansprüche,
**dadurch gekennzeichnet**, daß
beim Speichern von Daten in dem Speichermedium Information über die gerade verwendete Kompressionsrate ebenfalls in dem Speichermedium gespeichert wird.

11. Kompressionsschaltung für einen Telefonanrufbeantworter, mit einem Speichermedium für digitale Daten, einer Einrichtung zum Komprimieren eines digitalisierten Audiosignals und einer Einrichtung zum Aufzeichnen von Daten in dem Speichermedium,
**gekennzeichnet durch**
eine Einrichtung zum Umschalten der Kompressionsrate der Kompressionseinrichtung von einer ersten Kompressionsrate (R00; R01) zu einer zweiten Kompressionsrate (R11; R12; R13) während einer laufenden Aufzeichnung, wobei die zweite Kompressionsrate größer oder gleich die erste Kompressionsrate ist.

12. Kompressionsschaltung nach Patentanspruch 11,
**dadurch gekennzeichnet**, daß
die Umschalteinrichtung eine Prüfeinrichtung aufweist, die die Komprimierbarkeit des nach dem vorbestimmten Zeitpunkt (t1) eingehenden Eingangssignals prüft.

13. Kompressionsschaltung nach Patentanspruch 12,
**dadurch gekennzeichnet**, daß
die Umschalteinrichtung eine Wähleinrichtung aufweist, die die Kompressionsrate anhand des Ergebnisses der Prüfeinrichtung auswählt.
